# EUROPEAN PATENT APPLICATION

(11) **EP 1 503 518 A1**
(43) Date of publication of application: **02.02.2005**
(21) Application number: 03017292.8
(22) Date of filing: 30.07.2003
(51) Int. Cl.: H04B 7/04, H01Q 3/26

(54) **Antennas array calibration arrangement and method**

(71) Applicant: SIEMENS AKTIENGESELLSCHAFT, 80333 München (DE)
(72) Inventor: Schieblich, Christian, Dr., 89081 Ulm (DE)

(57) **Abstract**

According to one aspect of the invention, an arrangement for controlling transmission and/or reception of signals in a radio communications system is disclosed, comprising transceiving means (TX,RX) each connected to one of an array of antenna elements (#1...#n), wherein at least one of said transceiving means (TX,RX) is additionally connected to a calibration antenna for transmitting and/or receiving test signals to and/or from said antenna elements (#1...#n), at least one calibration processor for determining variations of said test signals in said transceiving means (TX,RX), and a beamforming processor for taking into account the determined variations for beamforming and/or determination of direction of arrival of respectively transmitted or received radio signals by said antenna elements (#1...#n).

## Description

### Field of the invention

The invention relates to an apparatus and a method for controlling transmission and/or reception of signals in a radio communication system, especially for application in base stations of mobile radio communications systems.

### Background of the invention

In radio communications systems, signals are exchanged between radio terminals and base stations via a so called radio interface or air interface. Radio terminals are in general mobile or stationary user terminals (UE - user equipments), whereas base stations (NB - Node B) are access stations associated with a land based communication network. Examples of known radio communication systems are second generation digital mobile radio communications systems like GSM (Global System for Mobile Communication) based on TDMA (Time Division Multiple Access) and providing data rates up to 100 kbit/s, and third generation digital mobile radio communications systems like UMTS (Universal Mobile Telecommunication System) based on CDMA (Code Division Multiple Access) with data rates up to 2 Mbit/s.

Antenna arrays can be used in any type of system that transmits and/or receives radio frequency signals using one or a plurality of antennas. The use of antenna arrays in above described systems provides for antenna performance improvements over the use of a single element antenna, including improved directionality, signal to noise ratio and interference rejection for received signals, as well as improved directionality, security, and reduced power requirements for transmitted signals. Antenna arrays can be used for signal reception only, for signal transmission only, or for both signal reception and transmission. Most antenna array systems consist of an antenna array and a signal processor that processes the signals going to and coming from individual array elements.

Thus, an antenna array is composed of a number of so called antenna elements, each connected to a radio frequency (RF) transceiver (transmitter/receiver). In reception mode, the receivers obtain RF signals from each antenna element and apply a down conversion of the received signals to base band signals. In the base band, demodulated signals are then compared with each other in amplitude and phase. The information on the direction of arrival (DOA) of the incoming signal, i.e. the direction of the transmitting station, is contained in the relationship between the received signals. In transmission mode, this information is subsequently used for beamforming (BF) in the direction of the received signal by correctly weighting base band signals for the different transmitters connected to the antenna elements.

The procedure described above can only be realised with a certain accuracy if the characteristics of the individual transmitters and receivers are known, so that these characteristics can be taken into account for the DOA and BF algorithms. To be precise, transfer functions (in amplitude and phase) from antenna elements to the base band outputs of the receivers as well as transfer functions from the base band inputs of the transmitters to the antenna elements must be known. During operation these transfer functions are subject to parameter variations (drift) of active and passive elements in the transceivers and cables. Therefore, transfer functions have to be continuously or at least periodically determined during operation of the transceivers.

Two different approaches of calibration procedures are known in the art. According to a first procedure, a known signal is fed to a test antenna (calibration antenna) which is arranged close to or as part of the antenna array (known from prior art document US-A-6236839) or is separated from the antenna array (known from prior art document US-A-5546090). The base band signals carry information about the transfer functions of the individual receiver paths, which can then be compared and adjusted. This procedure is called RX calibration.

According to a second procedure, known signals are fed to the individual antenna elements and received by a test antenna. The test antenna could thereby be located as described above. The received signals carry the information about the individual transfer functions of the transmitter paths, which are subsequently compared and adjusted. This procedure is called TX calibration.

Both calibration procedures can be realised either simultaneously, which is a preferred solution in systems using frequency division duplex (FDD), or consecutively as preferred in systems using time division duplex (TDD).

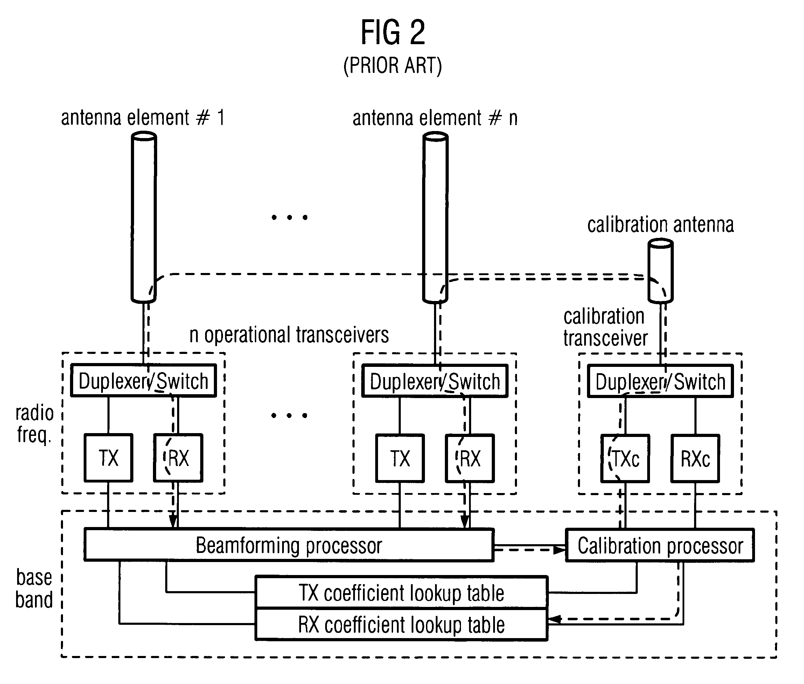

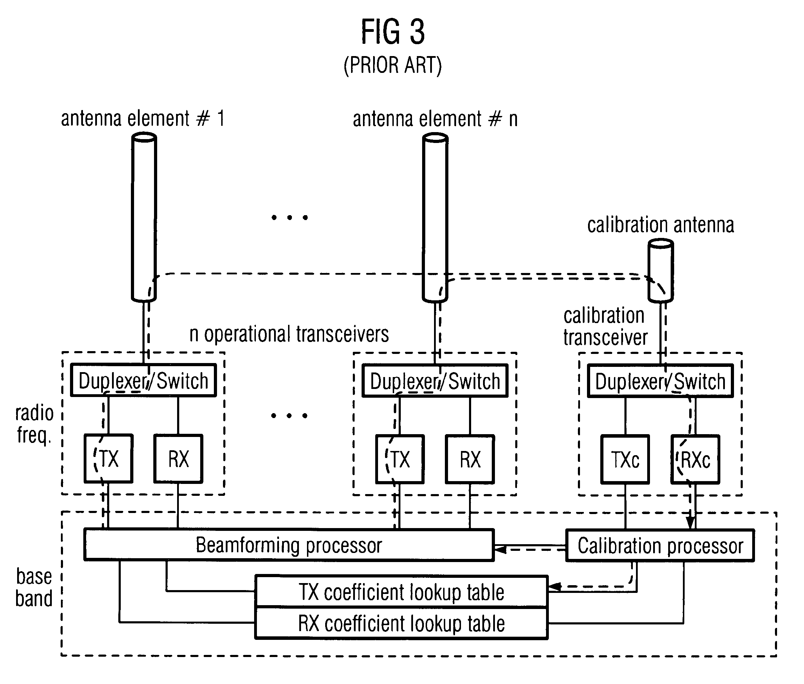

Configurations enabling the above described procedures are shown in FIG 2 and 3. According to these configurations, a calibration antenna is connected by means of a duplexer or switch to calibration transmitter (TXc) and receiver (RXc) circuits operating in the radio frequency range. Signals from/to the calibration antenna are processed in a calibration processor operating in the base band. The calibraton processor is connected to a beamforming processor that processes signals from/to the individual antenna elements (#1...#n) of an antenna array, of e.g. a base station. Coefficients representing the determined variations are stored in lookup tables.

In a RX calibration procedure (FIG 2, the signal flow is presented by broken lines), the calibration processor initiates the transmission of test signals from the calibration antenna over the air interface to the individual antenna elements of the antenna array. The received test signals are then fed back to the calibration processor by means of the beamforming processor. Within the calibration processor, transfer functions of the individual receiver paths are determined and evaluated and stored in a lookup table in order to be taken into account for normal operation of determining directions of arrival.

In a TX calibration procedure (FIG 3, the signal flow is presented by broken lines), the calibration processor initiates the transmission of test signals from each of the antenna elements which are received by the calibration antenna. The received signals containing information about the transfer functions of the individual transmitter paths are then evaluated in the calibration processor and stored in a lookup table in order to be taken into account for the normal operation of beamforming.

The described procedures suffer from the fact that specialised calibration means have to be integrated within each base station, thereby causing additional costs and space requirements.

It is therefore an object of the invention to provide calibration arrangements which do no suffer from the above stated disadvantages. This object is addressed by the arrangement and method according to the features of the independent claims.

### Statement of the invention

According to a first and second aspect of the invention, an arrangement and a method for controlling transmission and/or reception of signals in a radio communication system is provided. The arrangement thereby consists of transceiving means and antenna elements, wherein at least one of the transceiving means is additionally connected to a calibration antenna. The arrangement furthermore consists of a calibration processor for determining variations of the test signals in the transceiving means, and a beamforming processor for taking into account the determined variations for beamforming and/or determination of direction of arrival of respectively transmitted or received radio signals by the antenna elements.

The usage of transceiving means normally used for transmission and reception of radio signals to/from other radio stations for transmitting and/or receiving test signals via a calibration antenna in calibration procedures allow the saving of additional space and costs required for separate calibration transceiving means used in the prior art.

Further aspects of the invention are disclosed in the following description of the figures.

### Brief description of the figures

The invention may be understood more readily, and various other aspects and features of the invention may become apparent from consideration of the following description and the figures as shown in the accompanying drawing sheets, wherein:
- FIG 1: shows a block diagram of a radio communication network,
- FIG 2: Shows a signal flow for RX calibration in an arrangement known in the art,
- FIG 3: shows a further signal flow for TX calibration in an arrangement known in the art,
- FIG 4: shows an arrangement according to the invention in a TX calibration procedure,
- FIG 5: shows the arrangement according to the invention in a RX calibration procedure,
- FIG 6: shows the structure of a time frame of a TDD radio communication system,
- FIG 7: shows the arrangement according to the invention with additional amplifiers arranged close to the antenna elements,
- FIG 8: shows the arrangement according to the invention with a plurality of calibration processors for simultaneous calibration in different radio frequency bands, and
- FIG 9: shows the arrangement of FIG 8 with an optical link connection between multiplexer means.

### Detailed description of the invention

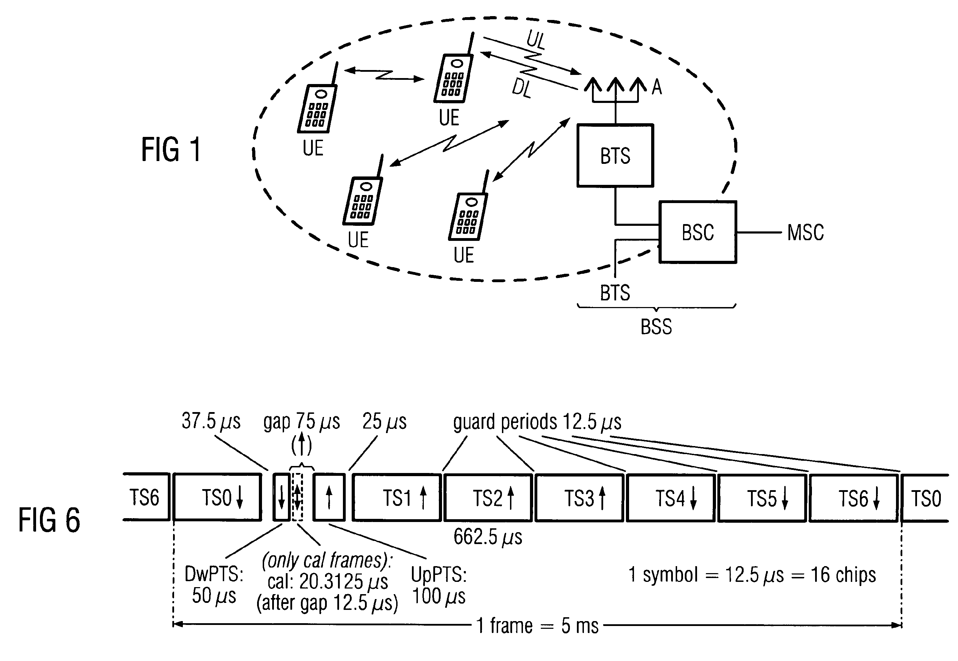

FIG 1 shows the basic structure of a mobile radio communications system, e.g. a GSM system. The system consists of a central mobile switching center MSC which is connected to the public switched telephone network PSTN and other MSCs. Connected to a MSC are a plurality of base station controllers BSC, which inter alia coordinate the sharing of radio resources provided by base stations BTS (Base Transceiver Station). Base stations BTS transmit in downlink DL and receive in uplink UL signals respectively to or from user equipments UE situated within an area covered by the base station BTS. In FIG 1 the base station BTS comprises an antenna array A consisting of a number of antenna elements. The antenna array, which depending on the configuration could is sometimes also called smart antenna, is used for beamforming of signals transmitted to individual user equipments in order to reduce interference caused to signal transmissions of parallel connections to other user equipments.

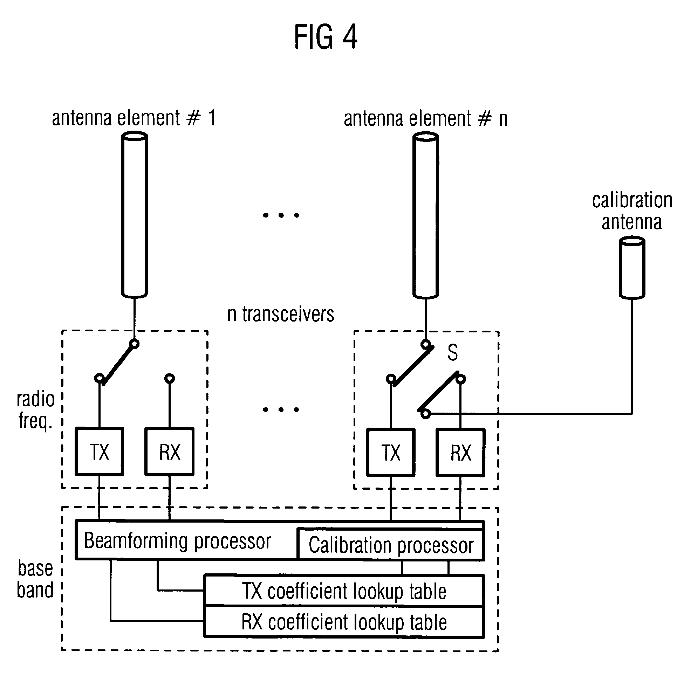

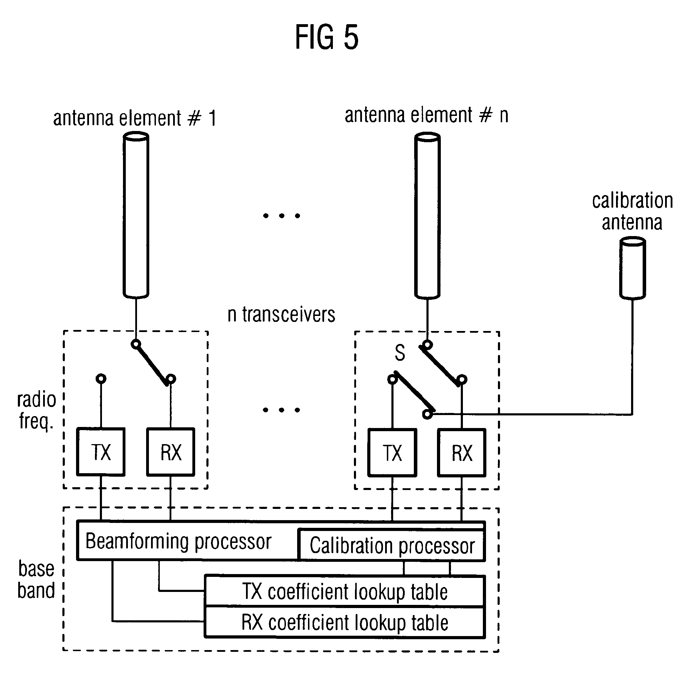

An arrangement according to the invention as shown in FIG 4 and 5 is based on the structure of FIG 2 and 3 described above. In contrast to arrangements known in the art, one of the transceiving means TX,RX is not only connected to one of the individual antenna elements #1...#n, but also to a calibration antenna via a switch S. In a calibration procedure, test signals are switched to/from the calibration antenna, whereas in normal operation, signals are transmitted and/or received via the antenna element connected to the transceiving means. The switch is realised in the radio frequency in any possible way known to the expert.

In the following, RX and TX calibration procedures using arrangements according to the invention are described with reference to FIG 4 to 9. These procedures can be realised continually or periodically during operation of the transceivers.

In a RX calibration procedure, i.e. calibration of the receiving paths of the transceivers, the calibration processor or an individual source generates test signals in the base band, which are converted into radio frequency band signals by a transmitter TX (in FIG 4 the transmitter on the right hand side) and fed to the calibration antenna via a switch S. After transmission over the air interface, the test signals are received by the individual antenna elements #1...#n and downconverted in the individual receivers RX into base band signals again. The beamforming processor connected to the transceiving means provides the received signals that contain information about transfer functions of the individual signal paths to the calibration processor, in which the differences in receiver characteristics are determined. Information about the determined differences are then stored in a RX coefficient lookup table and fed back to the beamforming processor in order to be taken into account for normal operation of determining directions of arrival of radio signals from user equipments in communication with the base station. As coefficients, e.g. maxima of phase and amplitude differences of coupling coefficients are determined by the calibration processor.

It can be seen from FIG 4 that the arrangement according to the invention makes simultaneous use of the transmitting as well as the receiving path of the transceiver on the right hand side.

In a TX calibration procedure, i.e. the calibration of the transmitting paths of the transceivers, the calibration processor or an individual source generates base band test signals that are fed to the transmitting means TX of the transceivers via the beamforming processor. The calibration processor is thereby realised within the beamforming processor or as a separated unit that is connected to the beamforming processor.

The test signals are upconverted into radio frequency band signals by the transmitting means TX and fed to the individual antenna elements #1...#n. After transmission over the air interface, the test signals are received by the calibration antenna, fed to the receiver RX via a switch S and downconverted in the receiver RX again into base band signals. From these received test signals, the calibration processor determines differences in transmitter characteristics and stores information about the determined differences in a TX coefficient lookup table in order to be taken into account for normal operation of beamforming of radio signals to user equipments by the beamforming processor. As coefficients e.g. maxima of phase and amplitude differences of coupling coefficients are determined by the calibration processor.

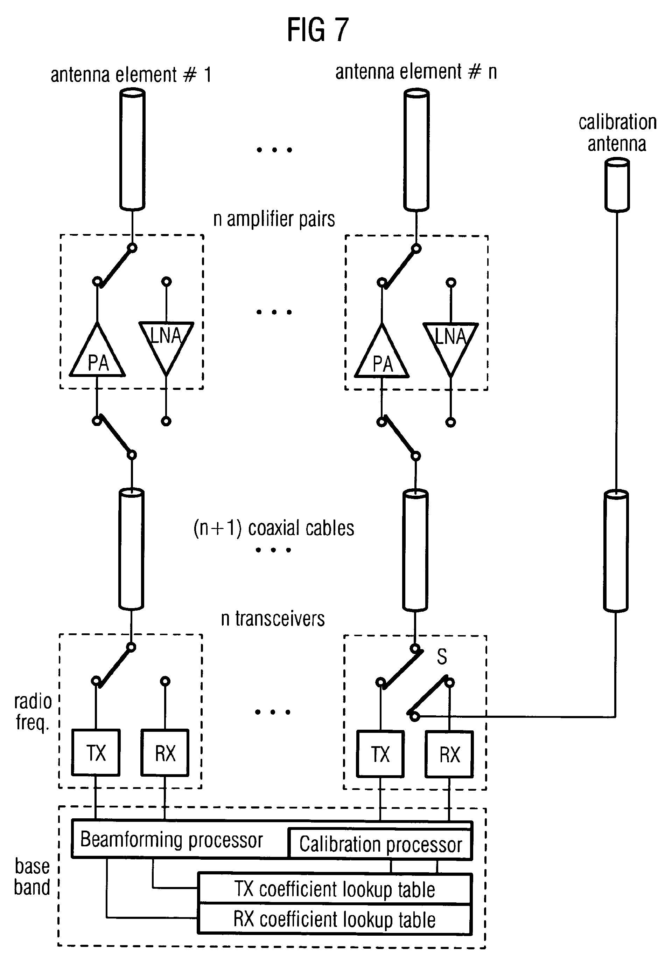

FIG 6 shows the structure of a time frame of a TDD (Time Division Duplex) system known from the third generation UMTS TDD-LCR (TDD-Low Chip Rate) standard and the chinese TD-SCDMA standard. The time frame consists of seven timeslots TS0...TS6 which are allocated either in uplink (↑), i.e. from the user equipments to the base station, or in downlink (↓), i.e. from the base station to the user equipments. After the first timeslot TS0, which according to the standard is always used for downlink transmission, a first switching point is provided with a special downlink pilot timeslot DwPTS, uplink pilot timeslot UpPTS and an extended guard period gap in between. According to the invention, this extended guard period gap is partly or entirely used for the transmission of test signals (in a so called cal frame) for RX and TX calibration. As an advantage, the usage of the extended guard period for the transmission and reception of calibration test signals reduces neither the overall transmission capacity of the time frame nor the performance of the system.

A further arrangement according to the invention is disclosed in FIG 7. In this case, power amplifiers PA, LNA operating in the radio frequency range are arranged close to the antenna elements #1...#n and normally mounted on a tower remote from the base station. These power amplifiers are often called tower mounted amplifiers. The connection between the remote power amplifiers and the transceivers located in the base station is realised e.g. by individual coaxial cables as shown in FIG 7. Accordingly, also the calibration antenna arranged close to the antenna elements is connected to one of the transceivers via a coaxial cable. It is not necessary to provide separate power amplifiers for the transmission and reception of test signals since the required transmission power is restricted and could be easily provided by the transmitter TX in the transceiving means. Moreover, the loss of the coaxial cables does not have any negative influence on the measurements in general and e.g. noise figures of the receiver. In this configuration, transmitting and receiving paths variations taking into account all receiving and transmitting means can be determined in the calibration processor.

Because the transceiving means TX, RX only operate in a single frequency band at a time, the TX calibration procedure is configured in that the calibration processor controls the transmitting means TX in that only one transmitting mean TX transmits test signals to the calibration antenna at a time in order to separate the received signals of the individual transmitting means TX in time. With reference to FIG 6, e.g. different transmitting means TX transmit consecutively test signals in the transmission gap.

In an RX calibration procedure, test signals are transmitted from the calibration antenna in a certain frequency band, received by all receiving means RX at the same time and analysed concurrently in the calibration processor. From one time frame to another, test signals are transmitted in different frequency bands in order to calibrate the transmission and/or reception paths for all carriers used.

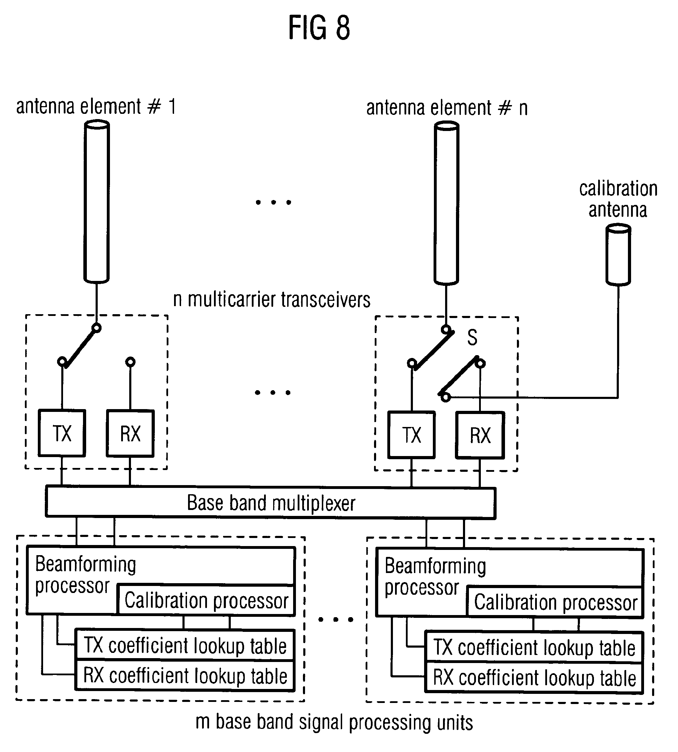

Since the realisation of TX and RX calibration procedures for a plurality of frequency bands would require the usage of a large number of consecutive time frames, FIG 8 discloses a further implementation alternative. Instead of just one calibration processor and corresponding lookup tables for storing determined coefficients, a number m of base band signal processing units are realised and connected to the transceiving means TX, RX e.g. via a base band multiplexer. Preferably, the number of base band signal processing units, comprising inter alia beamforming and calibration processors as well as lookup tables, is chosen according to the number of frequency bands in which the multicarrier transceivers operate.

The usage of a plurality of base band signal processing units enables the application of simultaneous calibration procedures in a number of frequency bands. This could be realised in that the transceivers TX, RX process m carriers simultaneously and the corresponding base band signals are multiplexed to different signal processing units, each operating for a particular frequency band. The signal processing units then realise a calibration for the individual frequency bands of the corresponding carriers.

In a TX calibration procedure, test signals in different frequency bands are transmitted concurrently by a number or all transceivers, e.g. dependent on the number of base band signal processing units. These test signals are received by the calibration antenna and receiving path of one of the transceivers, and multiplexed to the individual processing units for the different frequency bands. From one calibration procedure to another, the individual transceivers use different frequencies for the transmission of the test signal, so that characteristics of each transmitting path can be analysed for each frequency band in a relatively short time.

In a RX calibration procedure, test signals are transmitted via the calibration antenna and received by the individual receiving paths of the transceivers. For each frequency band or carrier used for transmission of test signals, one of the calibration processors determines individual variations of the characteristics of the receiving paths.

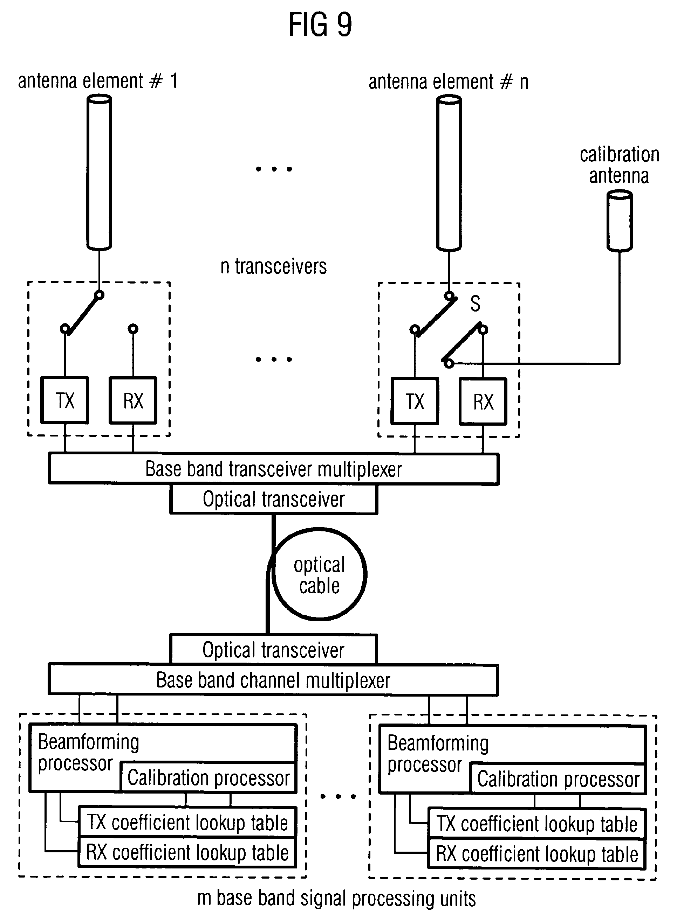

According to another alternative implementation of the inventive arrangement shown in FIG 9, the base band signal processing units are connected to n remote transceivers via an optical link. This optical link arrangement could equally be used instead of coaxial cables described with reference to FIG 7. In the case of FIG 9, the base band multiplexer described with reference to FIG 8 is devided into a base band transceiver multiplexer arranged close to the tower mounted transceivers and antenna elements, and a base band channel multiplexer arranged close to the base band signal processing units, preferably in the base station. The optical link is thereby realised by optical transceivers connected to the multiplexers and one or a plurality of optical cables. Advantage of the use of optical links instead of coaxial cables are e.g. that a smaller number of cables have to be installed for the connection between the base station and the remote, tower mounted transceivers and antenna elements, and that less insertion losses occur.

## Claims

1. Arrangement for controlling transmission and/or reception of signals in a radio communications system, comprising transceiving means (TX,RX) each connected to one of an array of antenna elements (#1...#n), wherein at least one of said transceiving means (TX,RX) is additionally connected to a calibration antenna for transmitting and/or receiving test signals to and/or from said antenna elements (#1...#n),
at least one calibration processor for determining variations of said test signals in said transceiving means (TX,RX), and a beamforming processor for taking into account the determined variations for beamforming and/or determination of direction of arrival of respectively transmitted or received radio signals by said antenna elements (#1...#n).

2. Arrangement according to claim 1, wherein
a transmission gap in a time frame of a TDD system is used for the transmission of said test signals for determining variations in the calibration processor.

3. Arrangement according to claim 1 or 2, wherein
in the said at least one transceiving means (TX,RX) connected to the calibration antenna test signals are switched via a switch (S) to the calibration antenna in a calibration process.

4. Arrangement according to one of the preceding claims, wherein
said calibration processor is realised within the beamforming processor.

5. Arrangement according to one of the preceding claims, comprising
at least one lookup table for storing the determined variations of the individual transceiving means (TX,RX).

6. Arrangement according to one of the preceding claims, wherein
at least two calibration processors, each determining variations for a different radio frequency, are connected to said transceiving means (TX,RX) via a base band multiplexer.

7. Base station (BS) of a radio communication system, with an arrangement according to any preceding claim.

8. Method for controlling transmission and/or reception of signals in a radio communication apparatus (BS), the radio communication apparatus (BS) comprising transceiving means (TX,RX) each connected to one of an array of antenna elements (#1...#n), at least one of the transceiving means (TX,RX) being additionally connected to a calibration antenna, wherein in a receiver calibration procedure, test signals are generated, fed to the at least one transceiving means (TX,RX) connected to the calibration antenna, transmitted via the calibration antenna and received by said antenna elements (#1...#n) and corresponding transceiving means (TX,RX), and/or
in a transmitter calibration procedure, test signals are generated, fed to the transceiving means (TX,RX), transmitted via said antenna elements (#1...#n), and received by said calibration antenna and said one of the transceiving means (TX,RX),
variations of the test signals in the transceiving means (TX,RX) are determined in at least one calibration processor, and
the determined variations are taken into account for beamforming and/or determination of direction of arrival of respectively transmitted or received radio signals by said antenna elements (#1...#n).

9. Method according to claim 8, wherein
variations of the test signals are determined consecutively for different radio frequencies.

10. Method according to claim 8 or 9, wherein
variations of the test signals are determined concurrently for different radio frequencies, thereby using individual calibration processors for the different radio frequencies.

11. Method according to one of the preceding claims 8 to 10, wherein
transfer functions of the transmitting and/or receiving paths are determined in the calibration processor.

12. Method according to one of the preceding claims 8 to 11, wherein
the calibration processor determines a maximum of a phase and amplitude difference of a coupling coefficient.

13. Method for controlling transmission and/or reception of signals in a radio communication apparatus (BS), the radio communication apparatus (BS) comprising transceiving means (TX,RX) each connected to one of an array of antenna elements (#1...#n) and calibration transceiving means connected to a calibration antenna, wherein
in a receiver calibration procedure, test signals are generated, fed to the calibration antenna, transmitted via the calibration antenna and received by said antenna elements (#1...#n) and corresponding transceiving means (TX,RX), and/or in a transmitter calibration procedure, test signals are generated, fed to the transceiving means (TX,RX), transmitted via said antenna elements (#1...#n), and received by said calibration antenna and said calibration transceiving means (TX,RX), wherein a transmission gap in a time frame is used for the transmission and reception of said test signals, variations of the test signals in the transceiving means (TX,RX) are determined in at least one calibration processor, and
the determined variations are taken into account for beamforming and/or determination of direction of arrival of respectively transmitted or received radio signals by said antenna elements (#1...#n).
